# FASCICULE DE BREVET EUROPEEN

(11) **EP 4 314 162 B1**
(45) Date de publication et mention de la délivrance du brevet: **18.06.2025**
(21) Numéro de dépôt: 22715126.3
(22) Date de dépôt: 21.03.2022
(51) Int. Cl.: C08L 95/00

(54) **COMPOSITION ÉMULSIFIANTE POUR BITUMES**
EMULGIERENDE ZUSAMMENSETZUNG FÜR BITUMEN
EMULSIFYING COMPOSITION FOR BITUMENS

(30) Priorité: 22.03.2021 FR 2102819
(43) Date de publication de la demande: 07.02.2024
(73) Titulaire: Valochem, 69580 Sathonay-Camp (FR)
(72) Inventeur: ROUSSEAU, Guillaume, 64000 PAU (FR)
(74) Mandataire: Plasseraud IP
(86) Numéro de dépôt international: PCT/FR2022/050507
(87) Numéro de publication internationale: WO 2022/200721

(56) Documents cités:
- EP-A1- 2 665 757
- EP-A1- 3 299 398
- EP-A2- 0 357 459
- CAO KUN ET AL: "Influences of the Molecular Weight and Its Distribution of Poly(styrene- alt -octadecyl maleimide) as a Flow Improver for Crude Oils", ENERGY & FUELS, vol. 30, no. 4, 21 April 2016 (2016-04-21), WASHINGTON, DC, US., pages 2721 - 2728, XP055926866, ISSN: 0887-0624, DOI: 10.1021/acs.energyfuels.5b02946
- ZHU QINGJUN ET AL: "Influences of Molecular Structure of Poly(styrene- co -octadecyl maleimide) on Stabilizing Asphaltenes in Crude Oil", ENERGY & FUELS, vol. 34, no. 3, 19 March 2020 (2020-03-19), WASHINGTON, DC, US., pages 3057 - 3064, XP055926876, ISSN: 0887-0624, DOI: 10.1021/acs.energyfuels.9b04372
- FLORJANCZYK * ZBIGNIEW ET AL: "A study of the relative reactivity of maleic anhydride and some maleimides in free radical copolymerization and terpolymerization", JOURNAL OF POLYMER SCIENCE PART A: POLYMER CHEMISTRY, vol. 28, no. 4, 1 March 1990 (1990-03-01), US, pages 795 - 801, XP055926854, ISSN: 0887-624X, DOI: 10.1002/pola.1990.080280408

## Description

### Domaine technique

La présente divulgation relève du domaine des émulsifiants polymériques. En particulier, la présente divulgation concerne les compositions émulsifiantes pour bitumes incorporant au moins un émulsifiant polymérique, notamment pour la préparation de matériaux bitumineux routiers. De manière plus spécifique, la présente divulgation appartient aux domaines de l'entretien et de la maintenance de réseaux routiers avec des enrobés bitumineux à l'émulsion de bitume (ACBE), selon la définition donnée au point 3.1.9 de la norme NF EN 13108-31 de septembre 2019.

### Technique antérieure

Il existe plusieurs techniques de préparation des matériaux bitumineux routiers. Elles sont classées en trois grandes catégories, les techniques dites à froid, les techniques dites à chaud et les techniques dites tièdes.

Les techniques dites à froid permettent d'utiliser le liant et les granulats à des températures inférieures à 100°C et le plus souvent à température ambiante. Elles sont basées sur l'utilisation d'émulsions de bitume comme liant. Le bitume est alors dispersé en phase aqueuse par action mécanique en présence de tensioactifs.

Les techniques dites à chaud utilisent un liant anhydre qui est rendu, ou maintenu, fluide par chauffage, généralement à 160°C ou plus. Les techniques dites à chaud font appel à des granulats chauffés et séchés à haute température avant d'être mis en contact avec le liant. Par exemple, la fabrication d'un enrobé peut avoir lieu à une température aux alentours de 160°C, ou plus selon les caractéristiques du liant, par enrobage de granulats avec le liant, on parle alors d'enrobés à chaud.

Les techniques dites tièdes, permettent également de réaliser les opérations décrites ci-dessus mais à des températures inférieures à celles utilisées pour les techniques à chaud, de manière générale entre 100°C et 150°C, on parle alors d'enrobés tièdes. Certaines techniques dites tièdes peuvent être réalisées en présence d'eau à un pourcentage massique inférieur à 3% par rapport à la masse de bitume, dans ces techniques les composants sont secs avant l'ajout de l'eau.

Les émulsions de bitume sont obtenues par dispersion à chaud d'un liant bitumineux dans une phase aqueuse. La fabrication de telles émulsions fait appel à une énergie mécanique de cisaillement mais également à une énergie chimique. Cette dernière est nécessaire afin de réduire la tension de surface eau/bitume et de permettre la conservation à moyen terme, c'est-à-dire environ 1 mois, du bitume à l'état dispersé dans la phase aqueuse. Cette énergie chimique est apportée par des molécules dites tensioactives et son intensité est donc dépendante de la famille de molécule considérée.

Les techniques utilisant des émulsions de bitume, en particulier les techniques dites à froid, peuvent être mises en œuvre pour différentes applications comme :
- l'enrobage, dont on peut citer par exemple les « graves émulsions », les « enrobés coulés à froid » (ECF), les « enrobés denses à froid », les « enrobés stockables » ;
- le répandage avec principalement les « enduits superficiels », « enduits de scellement », « émulsions d'imprégnation » et les « couches d'accrochage » ;
- les enrobés projetés ou encore « Jet Patching ».

Ces trois types d'applications routières font appel à des émulsions de bitume dont les caractéristiques sont adaptées à l'application visée. Ainsi, il est connu de la personne du métier que pour obtenir une émulsion de bitume adaptée à la technique des enrobés à froid, et plus précisément une « grave émulsion », il faut une émulsion à rupture lente afin que celle-ci puisse diffuser dans la matrice granulaire lors de la phase d'enrobage. Il faut également que l'émulsion soit stable au stockage pour éviter la rupture dans les cuves de stockage ou de transport et qu'elle présente une adhésivité suffisante pour répondre favorablement aux critères de performances de ces matériaux. En règle générale, les émulsions qui répondent favorablement à ces critères sont des émulsions de type C60B5/B7 et/ou C65B5/B7. Ces dénominations issues de la norme NF EN 13808 définissent des émulsions cationiques à rupture moyennement lente à lente. Le pH de ces émulsions est inférieur ou égal à 7. Les émulsifiants généralement employés dans ces techniques d'enrobage sont des tensioactifs cationiques de type polyamine, polyamidoamine ou encore imidazopolyamine. On trouve également dans ces applications l'emploi de tensioactifs amphotères.

Des solutions pour améliorer l'adhésivité entre le liant bitumineux et les agrégats ont été proposés, parmi lesquelles l'utilisation du produit de réaction d'un polymère styrène-anhydride maléique avec un polyalkylène amine dans des émulsions bitumineuses anioniques divulguées dans le brevet US 5 776 234. Les émulsions anioniques se distinguent des émulsions cationiques de par leur mécanisme de rupture. De fait, une vaste majorité des émulsions bitumineuses à application routière sont cationiques. Les émulsions bitumineuses anioniques sont principalement utilisées pour les applications industrielles, comme l'étanchéité de bâtiment, par exemple pour les fondations ou sous-bassement de terrain.

Les copolymères de type styrène maléimide substitués ont été étudiés mais ne sont pas connus comme tensioactif pour des émulsions de bitume. En particulier, Kun et al. ont étudié l'influence du poids moléculaire de poly(styrène-alt-octadecyl maleimide) en tant que promoteur de flux pour le pétrole (Energy Fuels 2016, 30, 2721-2728 ; DOI/10.1021/acs.energyfuels.5b02946). On peut citer également l'étude deQingjun et al. portant sur l'influence de la structure moléculaire poly(styrène-co-octadecyl maleimide comme stabilisateur d'asphaltènes dans le pétrole (Energy Fuels 2020, 34, 3057-3064 ; DOI/10.1021/acs.energyfuels.9b04372).

Il existe un besoin de proposer, pour les applications routières, une nouvelle famille de molécules tensioactives et une nouvelle composition tensioactive en vue d'obtenir des émulsions de bitume, en particulier des émulsions de bitume cationiques, présentant une bonne teneur en liant, un faible refus au tamis, une vitesse de rupture adaptée à l'application visée et une bonne stabilité au stockage, et dont l'utilisation dans les techniques d'enrobage à froid, par exemple de type grave émulsion permet d'obtenir des matériaux qui présentent une bonne qualité d'enrobage, une bonne stockabilité, une bonne maniabilité et une tenue à l'eau améliorées.

Les technologies existantes permettent d'obtenir un ou plusieurs critères satisfaisant sur les quatre décrits ci-dessus, mais jamais les quatre en même temps. Par exemple, les amines grasses permettent d'obtenir une bonne tenue à l'eau, mais un enrobage inférieur à 80% ; les cationiques sur base lignine modifiée amine donnent un enrobage de 100% mais de manière générale une tenue à l'eau inférieure à la norme.

En particulier, la présente invention vise à améliorer la tenue à l'eau, tout en maintenant ou améliorant le taux d'enrobage, des matériaux obtenus à partir d'une émulsion de bitume et à mieux contrôler la cinétique de rupture. Il est à noter que la cinétique de rupture est liée à la cinétique d'évaporation et de séchage dans le cadre de l'utilisation de compositions émulsifiantes anioniques mais liée à la cinétique de réaction chimique dans le cadre de l'utilisation de compositions émulsifiantes cationiques.

### Résumé

La présente divulgation vient améliorer la situation.

Il est proposé une composition émulsifiante comprenant :
- un copolymère comprenant entre 10% et 70% en mole d'au moins une unité monomérique A et entre 30% et 90% en mole d'au moins une unité monomérique B, ladite unité monomérique B étant cationique ou cationisable à pH acide,
- et au moins un émulsifiant choisi dans le groupe comprenant les émulsifiants cationiques, les émulsifiants non-ioniques et les émulsifiants amphotères et leurs mélanges.

Selon un autre aspect, il est proposé une émulsion bitumineuse comprenant un liant bitumineux, la composition émulsifiante telle que décrite ci-dessus, et de l'eau caractérisée en ce que le pourcentage massique du copolymère de ladite composition émulsifiante, par rapport au poids total de l'émulsion, est compris entre 0,75% et 3%, de manière plus avantageuse entre 0,9% et 2% et de manière encore plus avantageuse entre 1% et 1,4%.

Selon un autre aspect, il est proposé l'utilisation d'un copolymère de formule I, sous forme salifiée ou non : 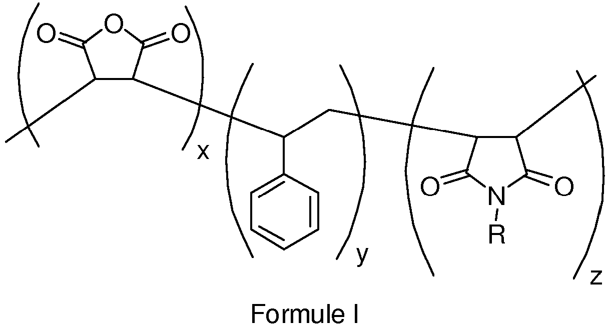 dans laquelle :
- R est un radical hydrocarboné monovalent linéaire ou ramifié, saturé ou insaturé, aliphatique ou aromatique, comprenant au plus 1000 atomes de carbone, préférentiellement entre 5 et 25 atomes de carbone, pouvant comprendre un ou plusieurs hétéroatomes choisi parmi l'azote et l'oxygène, de préférence R est une chaine alkyle contenant au moins une fonction amine, primaire, secondaire, tertiaire ou quaternaire ;
- X, Y et Z représentent la fraction molaire de chacune des unités monomériques, X est inférieur à 0,1, Y est compris entre 0,1 et 0,7 et Z est compris entre 0,3 et 0,9, la somme X + Y + Z étant égale à 1 ;
pour la préparation d'une émulsion bitumineuse de type cationique ou non-ionique.

Selon un autre aspect, il est proposé un procédé de préparation d'une émulsion bitumineuse telle que décrite précédemment, comprenant une étape de mélange d'un liant bitumineux et d'une composition émulsifiante telle que décrite ci-dessus.

Les caractéristiques exposées dans les paragraphes suivants peuvent, optionnellement, être mises en œuvre, indépendamment les unes des autres ou en combinaison les unes avec les autres :

### Description détaillée

### Composition émulsifiante

L'invention concerne donc une composition émulsifiante comprenant
- un copolymère comprenant entre 10% et 70% en mole d'au moins une unité monomérique A et entre 30% et 90% en mole d'au moins une unité monomérique B, ladite unité monomérique B étant cationique ou cationisable à pH acide,
- et au moins un émulsifiant choisi dans le groupe comprenant les émulsifiants cationiques, les émulsifiants non-ioniques et les émulsifiants amphotères et leurs mélanges.

Au sens de la présente invention, le terme cationisable désigne la propriété d'une molécule de pouvoir porter une ou plusieurs charges positives en fonction de son environnement immédiat. Par exemple, une molécule porteuse d'une fonction amine primaire, secondaire ou tertiaire peut-être non-ionique à pH supérieur ou égal au pKa de la fonction amine et cationique à un pH inférieur à son pKa, étant entendu que le taux de fonctions amines protonées s'accroit avec la baisse de pH.

Une composition émulsifiante est une composition apte à former une émulsion lors de son mélange avec une autre composition telle qu'une huile ou du bitume. Dans certains cas, notamment pour les émulsions de bitume, l'apport d'une énergie de cisaillement peut être nécessaire.

### Copolymère

Le copolymère de la composition émulsifiante selon l'invention est un copolymère statistique, alterné, en bloc ou greffé, préférentiellement le copolymère est un copolymère alterné.

De manière avantageuse, le copolymère a un poids moléculaire moyen en poids (Mw) compris entre 500 et 100 000, de manière plus avantageuse entre 10000 et 80000 et de manière encore plus avantageuse entre 30000 et 60000.

De manière avantageuse, l'unité monomérique A est choisie dans le groupe comprenant les, et de manière plus avantageuse constitué des, oléfines, dioléfines, styrènes, vinyles esters, vinyles éthers, acrylates, méthacrylates, acrylonitriles et leurs dérivés alkyles ou aryles, acide adipique, acide benzoïque, acide butyle benzoïque, décadiène, éthylène, isobutène, iso-octylène, esters (méth)acryliques d'alcools cycliques ou bicycliques saturés ou insaturés ayant de 6 à 20 atomes de carbone, esters (méth)acryliques, les alcools alkyliques à chaîne ramifiée, le néopentyle glycol, l'octadécène, l'acide palmitique, le pentaérythritol/néopentyle glycol, l'anhydride phthlatique, le styrène, le triméthylol éthane vinyle acétate ou les vinyles alkyl éthers et leurs mélanges. De manière particulièrement avantageuse, l'unité monomérique A est le styrène.

Le pourcentage molaire d'unité monomérique A, par rapport au nombre total d'unités monomériques dans le copolymère, est compris entre 10% et 70%, de préférence entre 20% et 60% de manière plus préférentielle entre 45% et 65% et de manière encore plus préférentielle, le pourcentage molaire d'unité monomérique A est de 50%.

L'unité monomérique B est cationique ou cationisable. Dans le mode de réalisation dans lequel l'unité monomérique B est cationique, ladite unité monomérique B comprend avantageusement un ammonium quaternaire. Dans le mode de réalisation dans lequel l'unité monomérique B est cationisable, ladite unité monomérique B comprend avantageusement une fonction amine primaire, secondaire ou tertiaire. Dans ce mode de réalisation ladite fonction amine capte un proton lorsque le copolymère est placé dans un milieu dont le pH est inférieur au pKa de ladite fonction amine, étant entendu que le taux de fonctions amines protonées s'accroit avec la baisse du pH.

Le pourcentage molaire d'unité monomérique B, par rapport au nombre total d'unités monomériques dans le copolymère, est compris entre 30% et 90%, de préférence entre 40% et 70% de manière plus préférentielle entre 45% et 65% et de manière encore plus préférentielle, le pourcentage molaire d'unité monomérique B est de 50%.

Dans un mode de réalisation particulièrement avantageux, la composition émulsifiante selon l'invention est caractérisée en ce que le copolymère est de formule I, sous forme salifiée ou non : 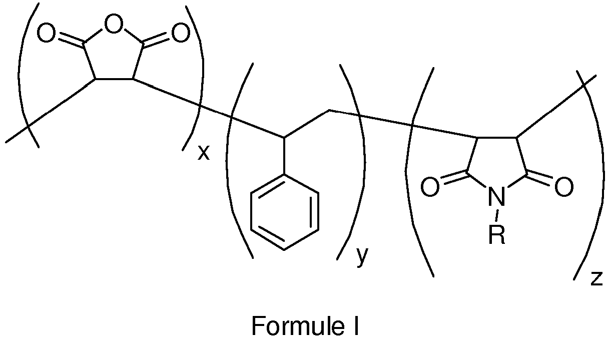 dans laquelle :
- R est un radical hydrocarboné monovalent linéaire ou ramifié, saturé ou insaturé, aliphatique ou aromatique, comprenant au plus 1000 atomes de carbone, préférentiellement entre 5 et 25 atomes de carbone, pouvant comprendre un ou plusieurs hétéroatomes choisi parmi l'azote et l'oxygène, de préférence R est une chaine alkyle contenant au moins une fonction amine, primaire, secondaire, tertiaire ou quaternaire ;
- X, Y et Z représentent la fraction molaire de chacune des unités monomériques, X est inférieur à 0,1, Y est compris entre 0,1 et 0,7 et Z est compris entre 0,3 et 0,9, la somme X + Y + Z étant égale à 1.

De manière avantageuse, R est choisi dans le groupe comprenant la, de préférence constitué de la, 2-éthylhexylamine, N-octylamine, décylamine, octadécylamine, stéarylamine, laurylamine, N-méthylstéarine amine, N-éthyloctadecylamine, N-butyllaurylamine et leurs mélanges.

X est inférieur à 0,5, de manière avantageuse X est inférieur à 0,1 et de manière encore plus avantageuse, X est égal à 0.

Y est compris entre 0,1 et 0,7, de manière avantageuse, Y est compris entre 0,2 et 0,6, de manière plus avantageuse Y est compris entre 0,35 et 0,55 et de manière encore plus avantageuse, Y est égal à 0,5.

Z est compris entre 0,3 et 0,9, de manière avantageuse, Z est compris entre 0,4 et 0,7, de manière plus avantageuse Z est compris entre 0,45 et 0,65 et de manière encore plus avantageuse, Z est égal à 0,5.

### Emulsifiant

La composition émulsifiante selon l'invention comprend au moins un émulsifiant choisi dans le groupe comprenant les émulsifiants cationiques, les émulsifiants non-ioniques et les émulsifiants amphotères et leurs mélanges, de manière avantageuse l'émulsifiant est choisi dans le groupe comprenant les émulsifiants cationiques et les émulsifiants non-ioniques de manière encore plus avantageuse l'émulsifiant est un émulsifiant cationique.

De manière avantageuse, la composition émulsifiante comprend entre 0,5% et 2,5% en poids, par rapport au poids total de l'émulsion, d'émulsifiant.

De manière avantageuse, la composition émulsifiante comprend entre 50% et 90% en poids, par rapport au poids total des composants autres que l'eau, du copolymère de formule I, entre 0,1% et 30% en poids, par rapport au poids total des composants autres que l'eau, de l'émulsifiant non-ionique et entre 0% et 5% en poids, par rapport au poids total des composants autres que l'eau, d'émulsifiant cationique et/ou amphotère.

De manière avantageuse, les émulsifiants ont une HLB comprise entre 10 et 30 selon la méthode Griffin de 1949.

De manière avantageuse, l'émulsifiant comprend au moins une fonction amine, polyamine, amide, alkylamidoamine, alkylimidazoline, ammonium quaternaire, oxyde d'éthylène et oxyde de propylène. Avantageusement, l'émulsifiant comprend au moins deux fonctions différentes choisies parmi les fonctions amine, polyamine, amide, alkylamidoamine, alkylimidazoline, ammonium quaternaire, oxyde d'éthylène et oxyde de propylène.

Avantageusement, ledit émulsifiant est choisi parmi les alkylimidazopolyamines grasses, les alkylamidopolyamines grasses, les polyamines grasses, les polyamines grasses alcoxylées, les polyamines grasses alkylées et leurs mélanges, plus avantageusement, ledit émulsifiant est choisi parmi les mélanges d'alkylimidazopolyamines grasses en C16-C18 obtenues par réaction d'acides gras ou d'huile végétale avec des polyéthylènepolyamines comme la triéthylènetétramine (TETA), la tétraéthylènepentamine (TEPA) et la pentaéthylènehexamine (PEHA) et des polyamines grasses de suif éthoxylée.

### Emulsion bitumineuse

L'invention concerne également une émulsion bitumineuse comprenant un liant bitumineux, la composition émulsifiante telle que décrite ci-dessus, et de l'eau, caractérisée en ce que le pourcentage massique du copolymère de ladite composition émulsifiante, par rapport au poids total de l'émulsion, est compris entre 0,75% et 3%, de manière plus avantageuse entre 0,9% et 2% et de manière encore plus avantageuse entre 1% et 1,4%.

De manière avantageuse, l'émulsion bitumineuse présente un pourcentage massique de liant bitumineux, par rapport au poids total de l'émulsion, compris entre 50% et 80%, de préférence entre 55% et 75% et de manière plus préférentielle, entre 60% et 70%.

### Liant Bitumineux

Dans le cadre de la présente invention, on entend par liant bitumineux l'ensemble des produits suivants : le bitume naturel, les bitumes issus d'une huile minérale et les mélanges qui en résultent, les bitumes obtenus par distillation atmosphérique, par distillation sous pression réduite, par viscoréduction, par craquage, les résidus de précipitation (comme par exemple dans du propane), les bitumes soufflés, les goudrons ainsi que les mélanges qui peuvent en résulter, les liants routiers synthétiques ou d'origine végétale contenant des résines naturelles modifiées ou non en mélange avec des huiles d'origine pétrolière ou végétale ou leurs dérivés et les bitumes modifiés par des polymères naturels ou de synthèse. Comme polymère naturel ou de synthèse, on peut citer par exemple, et de manière indicative et non limitative, les élastomères thermoplastiques comme les copolymères statistiques ou séquencés de styrène et de butadiène, linéaires ou étoilés (SBR, SBS) ou de styrène et d'isoprène (SIS), éventuellement réticulés, les copolymères d'éthylène et d'acétate de vinyle, les homopolymères et copolymères oléfiniques d'éthylène de propylène ou de butylène, les polyisobutylènes, les polybutadiènes, les polyisoprènes, les polychlorure de vinyle, les poudrettes de caoutchouc ou encore tout polymère utilisé pour la modification des bitumes ainsi que leurs mélanges. On utilise en général une quantité de polymère de 2 à 10% en poids par rapport au poids de bitume. On considère ces différents polymères sans limitation de présentation, qu'ils soient sous forme anhydre (poudre, granulés ou en solution) mais également sous forme de dispersion aqueuse (latex).

Certains bitumes synthétiques sont également appelés parfois bitumes clairs, pigmentables ou colorables. Ces bitumes contiennent peu ou pas d'asphaltènes et peuvent être par conséquent colorés. Ces bitumes sont à base de résine de pétrole et/ou de résine indène-coumarone et d'huile lubrifiante comme décrit par exemple dans le brevet EP 0 179 510.

Des exemples de liants de synthèse courants sont les liants Kromatis^{®} de Total et/ou Bituclair^{®} de Colas.

Les liants bitumineux utilisables pour l'invention peuvent également être des mélanges de bitumes avec des liants hydrocarbonés issus de procédés industriels tels que la poix de tall oil (issue du processus de raffinage de la pâte à papier) ou la poix issue des processus de distillation des huiles végétales. De tels produits, liants bitumineux issus du raffinage ou synthétiques peuvent être utilisés tels quels ou fluidifiés via un solvant organique minéral ou végétal, siccatif ou non par exemple pour leur utilisation comme primaire d'accrochage, enduit d'étanchéité pour couche d'accrochage routière. Selon un autre mode d'utilisation, ils peuvent être dispersés en milieu aqueux et ainsi donner naissance à des liants hydrocarbonés en phase aqueuse. Ces liants, qu'ils soient anhydres ou aqueux, peuvent être utilisés tels quels ou mélangés à des matières minérales par exemple sous la forme de granulats, tels que sable, gravillons, etc... pour obtenir des matériaux bitumineux routiers.

Dans un mode de réalisation, les bitumes utilisés sont des bitumes provenant du raffinage du pétrole brut en particulier de la distillation atmosphérique et/ou sous vide du pétrole. Ces bitumes peuvent être éventuellement soufflés, viscoréduits et/ou désasphaltés. Les bitumes peuvent être des bitumes de grade dur ou de grade mou. Les différents bitumes obtenus par les procédés de raffinage peuvent être combinés entre eux pour obtenir le meilleur compromis technique.

Dans un autre mode de réalisation, les bitumes utilisés sont des bitumes fluxés par addition de solvants volatils, de fluxants d'origine pétrolière, de fluxants carbochimiques et/ou de fluxants d'origine végétale.

De préférence, le bitume selon l'invention est choisi parmi les bitumes de raffinage de pétrole brut non modifiés, fluxés ou non.

### Additifs

De manière générale, pour la préparation de matériaux routiers bitumineux, les bitumes ou liants employés peuvent être purs ou bien modifiés par des polymères. Dans le cas de l'utilisation de polymères, ceux-ci peuvent être ajoutés au bitume de manière à obtenir des produits bitumineux avec des propriétés mécaniques améliorées. Ces produits bitumineux modifiés par des polymères sont utilisés en construction routière, urbaine et aéroportuaire en utilisant par exemple les techniques mentionnées ci-dessus. Les polymères sont des macromolécules formées par liaisons chimiques covalentes entre plusieurs unités répétées ou monomères. La modification des bitumes avec des polymères linéaires ou ramifiés de fortes masses molaires est employée pour améliorer les propriétés mécaniques du produit bitumineux. Les bitumes ainsi modifiés, appelés bitumes modifiés polymère ou encore BmP, présentent une plus grande souplesse à basse température et une meilleure plasticité à haute température que leur équivalent non modifié. Ils présentent également une plus forte cohésion interne. Enfin les BmP présentent un module de rigidité plus élevé ce qui améliore aussi la résistance à l'orniérage des matériaux bitumineux ou à l'arrachement de granulats des enduits par exemple.

L'émulsion bitumineuse peut également comprendre un ou plusieurs additifs pour encore améliorer les performances.

L'émulsion bitumineuse selon l'invention peut être avantageusement utilisée pour préparer un enrobé bitumineux. Un enrobé bitumineux est un mélange entre un liant bitumineux et un ou plusieurs matériaux granulaires, recyclés ou natifs tel que des gravillons ou du sable. L'émulsion bitumineuse selon l'invention est particulièrement adaptée pour la préparation d'un enrobé bitumineux comprenant entre 5% et 12% en poids, par rapport au poids total de l'enrobé bitumineux, de l'émulsion bitumineuse et entre 88% et 95% en poids, par rapport au poids total de l'enrobé bitumineux de matériaux granulaire.

### Autres aspects de l'invention

L'invention concerne également l'utilisation d'un copolymère de formule I, sous forme salifiée ou non : 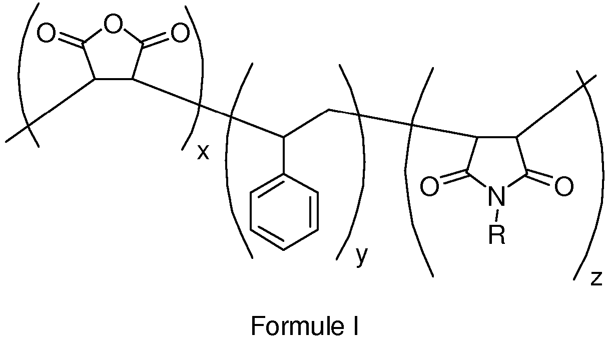 dans laquelle :
- R est un radical hydrocarboné monovalent linéaire ou ramifié, saturé ou insaturé, aliphatique ou aromatique, comprenant au plus 1000 atomes de carbone, préférentiellement entre 5 et 25 atomes de carbone, pouvant comprendre un ou plusieurs hétéroatomes choisi parmi l'azote et l'oxygène, de préférence R est une chaine alkyle contenant au moins une fonction amine, primaire, secondaire, tertiaire ou quaternaire ;
- X, Y et Z représentent la fraction molaire de chacune des unités monomériques, X est inférieur à 0,1, Y est compris entre 0,1 et 0,7 et Z est compris entre 0,3 et 0,9, la somme X + Y + Z étant égale à 1 ;
pour la préparation d'une émulsion bitumineuse de type cationique ou non-ionique.

Le copolymère de formule I est avantageusement obtenu par la réaction d'un copolymère de formule II 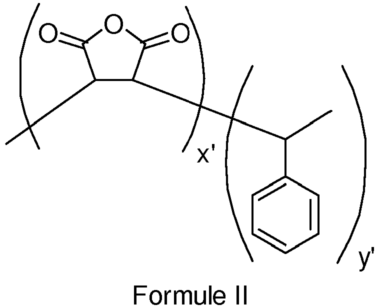 dans laquelle :
- X', Y' représentent la fraction molaire de chacune des unités monomériques, X' est compris entre 0,3 et 0,9 et Y' est compris entre 0,1 et 0,7, la somme X' + Y' étant égale à 1 ;
   et d'une amine de formule III 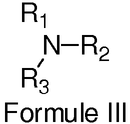
   dans laquelle :
      - R₁ est un radical hydrocarboné monovalent linéaire ou ramifié, saturé ou insaturé, aliphatique ou aromatique, comprenant au plus 1000 atomes de carbone, préférentiellement entre 5 et 25 atomes de carbone, pouvant comprendre un ou plusieurs hétéroatomes choisi parmi l'azote et l'oxygène, de préférence R₁ est une chaine alkyle contenant au moins une fonction amine, primaire, secondaire, tertiaire ou quaternaire ;
      - R₂ et R₃, identiques ou différents sont choisis parmi un atome d'hydrogène, un radical hydrocarboné monovalent linéaire ou ramifié, saturé ou insaturé, aliphatique ou aromatique, comprenant au plus 1000 atomes de carbone, préférentiellement entre 5 et 25 atomes de carbone, pouvant comprendre un ou plusieurs hétéroatomes choisis parmi l'azote et l'oxygène, de préférence R₂ et/ou R₃ est une chaine alkyle contenant au moins une fonction amine, primaire, secondaire, tertiaire ou quaternaire.

L'invention concerne également un procédé de préparation d'une émulsion bitumineuse telle que décrite précédemment, comprenant une étape de mélange d'un liant bitumineux et d'une composition émulsifiante telle que décrite ci-dessus.

### Exemples

### Préparation des émulsions bitumineuses El1 à EI4, EC1 et EC2 :

Les émulsions bitumineuses El1 à EI4, selon l'invention, et EC1 et EC2 (contre-exemples) ont été obtenues avec un moulin colloïdal de la marque Emulbitume. La teneur massique en bitume de l'émulsion est de 60%. Le bitume utilisé est un bitume paraffinique de pénétrabilité 70/100 fourni par la société Total et provenant de la raffinerie de Feyzin en France. La température du bitume lors de l'émulsification est de 145°C. Le bitume a été utilisé fluxé avec un fluxant pétrolier.

Les émulsions ont été préparées par introduction dans un récipient de la composition émulsifiante en phase aqueuse et du liant bitumineux. Les compositions des émulsions bitumineuses sont répertoriées dans le tableau 1 ci-dessous :

**[Tableau 1]**

| Composants | EI1 | EI2 | EI3 | EI4 | EC1 | EC2 |
|---|---|---|---|---|---|---|
| Phase anhydre : | | | | | | |
| Bitume 70/100 (kg/t) | 582 | 582 | 582 | 582 | 582 | 582 |
| Fluxant (kg/t) | 18 | 18 | 18 | 18 | 18 | 18 |
| Phase aqueuse : | | | | | | |
| CTA (kg/t) | - | - | - | - | - | 14 |
| CTI (kg/t) | 12,9 | 13 | 14 | 18 | 10,8 | - |
| Dont TI (kg/t) | 7,5 | 9,3 | 10 | 13,8 | 5,3 | - |
| HCl 33% (kg/t) | 2,5 | 2,5 | 2,5 | 2,5 | 2,5 | 2,5 |
| Eau (kg/t) | 384,6 | 384,5 | 383,5 | 379,5 | 386,7 | 383,5 |

| | | | | | | |
|---|---|---|---|---|---|---|
| *CTA : émulsifiant : INDULIN GEF2^{®} ;* *CTI : composition émulsifiante comprenant du XIRAN 1000IC^{®}, SERDOX NSP50^{®} comme émulsifiant non ionique et DINORAM O^{®} comme émulsifiant cationique* ; *TI : XIRAN 1000IC^{®}.* | | | | | | |

### Évaluation des émulsions bitumineuses

Les émulsions sont analysées pour déterminer leur qualité et leurs propriétés applicatives, selon les critères de la norme NE EN 13808 d'août 2013.

La teneur en liant de l'émulsion est caractérisée par la méthode de la balance dessicatrice (mesurée selon la norme NF EN 16849 de décembre 2016).

La qualité de l'émulsion est jugée par le résidu sur tamis à 0,5 mm après fabrication (mesuré selon la norme NF EN 1429 d'août 2013)

La qualité de la déstabilisation après application est jugée grâce à l'indice de rupture mesuré avec du filler Q92 exprimé en Forshamer selon le mode opératoire décrit dans la norme NF EN 13075-1 de décembre 2016. Plus cet indice est bas et plus l'émulsion aura tendance à se déstabiliser rapidement conduisant à une qualité d'enrobage plus ou moins bonne.

Les résultats sont répertoriés dans le tableau 2 ci-dessous :

**[Tableau 2]**

| | EI1 | EI2 | EI3 | EI4 | EC1 | EC2 |
|---|---|---|---|---|---|---|
| Pénétrabilité du liant (1/10 de mm) | 218 | 218 | 218 | 218 | 218 | 218 |
| pH à 26°C : | 2,5 | 2,6 | 2,6 | 2,5 | 2,1 | 2,6 |
| Extrait sec : | | | | | | |
| IR - 110°C (%) | 61,0 | 61,0 | 59,4 | 60,1 | 58,6 | 60,2 |
| Refus au tamis 0,5mm (%) | < 0,1 | < 0,1 | < 0,1 | < 0,1 | < 0,1 | < 0,1 |
| Indice de rupture Forshamer | 181 | 189 | 199 | 221 | 210 | 183 |

Toutes les émulsions testées, sont conformes aux spécifications de la norme NF EN 13808 d'août 2013.

### Qualification des émulsions dans la technique des Graves Emulsion :

L'un des critères normatifs de qualification de la performance des techniques d'enrobés à froid consiste en la mesure de la sensibilité à l'eau. Cette mesure de la sensibilité est codifiée au travers de la norme d'essai NF P 98 251-4, Essai DURIEZ aménagé sur mélanges hydrocarbonés à froid à l'émulsion de bitume.

Des enrobés à froid de type « Grave Emulsion » ont été formulés avec les émulsions El1 à EI4, EC1 et EC2 précédentes en s'assurant de conserver une teneur en liant résiduel constante dans les enrobés. La nature pétrographique des matériaux a été analysée, il s'agit d'un séricitoschiste de la carrière CEYRAT. Les formules des graves émulsions sont rappelées dans le tableau 3 ci-après :

**[Tableau 3]**

| | GEI1 | GEI2 | GEI3 | GEI4 | GEC1 | GEC2 |
|---|---|---|---|---|---|---|
| **GE Séricitoschiste 0/10:** | | | | | | |
| Matériaux (%) | 100 | 100 | 100 | 100 | 100 | 100 |
| Emulsion (N° - ppc) | 7,2 | 7,2 | 7,2 | 7,2 | 7,2 | 7,2 |
| Eau totale (ppc) | 7 | 7 | 7 | 7 | 7 | 7 |

La norme EN 13108-31 définit les différents critères de performance des enrobés à l'émulsion de bitume ainsi que les classes de performance. Dans cette norme un critère particulier lié à la qualité d'enrobage est spécifié en page 42 reproduit dans le tableau 4 ci-dessous.

**[Tableau 4]**

| Classe d'enrobage | Pourcentage minimal de couverture de liant % |
|---|---|
| C3 | >97 |
| C2 | 90 à 97 |
| C1 | 75 à <90 |
| C0 | <75 |

Toutes les émulsions testées ont conduit à un niveau d'enrobage C3 > 97%.

Ces enrobés ont par la suite été soumis à l'essai Duriez selon la norme NF P 98 251-4. La norme NF P 98-121 définit les performances des enrobés bitumineux à l'émulsion de bitume de type grave émulsion, cette norme précise entre autres les épaisseurs d'application de tels matériaux, ainsi que les caractéristiques minimales à atteindre en fonction du type de produit formulé. Dans cette norme un tableau récapitulatif présente les performances minimales à atteindre à l'essai Duriez, les informations de ce tableau sont reproduites en partie dans le tableau 5 ci-dessous.

**[Tableau 5]**

| Type de Grave-émulsion | Type R | Type S classe 1 | Type S classe 2 |
|---|---|---|---|
| Résistance à la compression sans immersion (R en MPa) | ≥ 1,5 | ≥ 2,5 | ≥ 3,5 |
| Rapport r/R | ≥ 55% | ≥ 55% | ≥ 65% |

Les résultats obtenus avec les différentes graves émulsions sont consignés dans le tableau 6 ci-dessous :

**[Tableau 6]**

| | GEI1 | GEI2 | GEI3 | GEI4 | GEC1 | GEC2 |
|---|---|---|---|---|---|---|
| **GE Séricitoschiste 0/10:** | | | | | | |
| r/R (%) | 55 | 61 | 60 | 77 | 33 | 33 |
| R (MPa) | 4,4 | 4,8 | 4,5 | 5,0 | 2,7 | 4,4 |
| Teneur en liant interne (%) | 3,9 | 3,9 | 3,9 | 3,9 | 3,9 | 3,9 |

On constate à la suite de ces essais, que plus la proportion en TI augmente dans la composition tensioactive de l'invention et donc dans l'émulsion, plus la résistance à l'eau de l'enrobé augmente.

Ainsi, la composition émulsifiante selon l'invention permet d'atteindre les spécifications souhaitées de tenue à l'eau sans dégrader la qualité d'enrobage, ni la maniabilité de l'enrobé.

## Revendications

1. Composition émulsifiante comprenant :
- un copolymère de formule I, sous forme salifiée ou non : 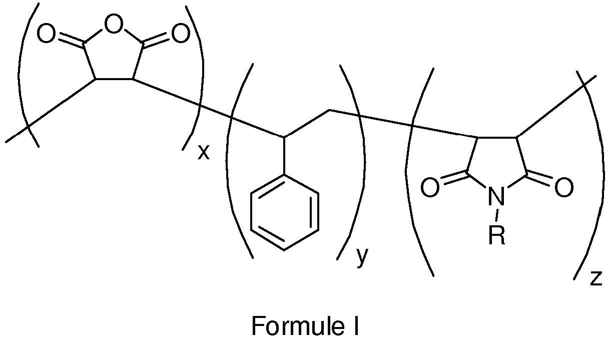 dans laquelle :
- R est un radical hydrocarboné monovalent linéaire ou ramifié, saturé ou insaturé, aliphatique ou aromatique, comprenant au plus 1000 atomes de carbone, préférentiellement entre 5 et 25 atomes de carbone, pouvant comprendre un ou plusieurs hétéroatomes choisi parmi l'azote et l'oxygène, de préférence R est une chaine alkyle contenant au moins une fonction amine, primaire, secondaire, tertiaire ou quaternaire ;
- X, Y et Z représentent la fraction molaire de chacune des unités monomériques, X est inférieur à 0,1, Y est compris entre 0,1 et 0,7 et Z est compris entre 0,3 et 0,9, la somme X + Y + Z étant égale à 1,
- et au moins un émulsifiant choisi dans le groupe comprenant les émulsifiants cationiques, les émulsifiants non-ioniques et les émulsifiants amphotères et leurs mélanges.

2. Composition émulsifiante selon la revendication 1, **caractérisée en ce que** R est choisi dans le groupe comprenant la, de préférence constitué de la, 2-éthylhexylamine, N-octylamine, décylamine, octadécylamine, stéarylamine, laurylamine, N-méthylstéarine amine, N-éthyloctadecylamine, N-butyllaurylamine et leurs mélanges.

3. Composition émulsifiante selon l'une quelconque des revendications précédentes, **caractérisée en ce que** l'émulsifiant est choisi parmi les alkylimidazopolyamines grasses, les alkylamidopolyamines grasses, les polyamines grasses, les polyamines grasses alcoxylées, les polyamines grasses alkylées et leurs mélanges, plus avantageusement, ledit émulsifiant est choisi parmi les mélanges d'alkylimidazopolyamines grasses en C16-C18 obtenues par réaction d'acides gras ou d'huile végétale avec des polyéthylènepolyamines comme la triéthylènetétramine (TETA), la tétraéthylènepentamine (TEPA) et la pentaéthylènehexamine (PEHA) et des polyamines grasses de suif éthoxylée.

4. Emulsion bitumineuse comprenant un liant bitumineux, la composition émulsifiante selon l'une quelconque des revendications 1 à 3 et de l'eau, **caractérisée en ce que** le pourcentage massique du copolymère de ladite composition émulsifiante, par rapport au poids total de l'émulsion, est compris entre 0,75% et 3%, de manière plus avantageuse entre 0,9% et 2% et de manière encore plus avantageuse entre 1% et 1,4%.

5. Emulsion bitumineuse selon la revendication 4, **caractérisée en ce que** le pourcentage massique de liant bitumineux, par rapport au poids total de l'émulsion, est compris entre 50% et 80%.

6. Utilisation d'un copolymère de formule I, sous forme salifiée ou non : 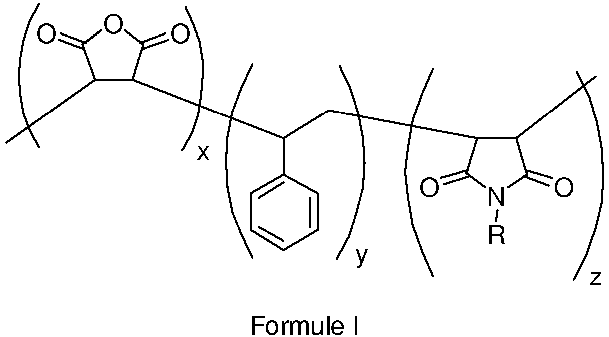 dans laquelle :
- R est un radical hydrocarboné monovalent linéaire ou ramifié, saturé ou insaturé, aliphatique ou aromatique, comprenant au plus 1000 atomes de carbone, préférentiellement entre 5 et 25 atomes de carbone, pouvant comprendre un ou plusieurs hétéroatomes choisi parmi l'azote et l'oxygène, de préférence R est une chaine alkyle contenant au moins une fonction amine, primaire, secondaire, tertiaire ou quaternaire ;
- X, Y et Z représentent la fraction molaire de chacune des unités monomériques, X est inférieur à 0,1, Y est compris entre 0,1 et 0,7 et Z est compris entre 0,3 et 0,9, la somme X + Y + Z étant égale à 1 ;
pour la préparation d'une émulsion bitumineuse de type cationique ou non-ionique.

7. Utilisation selon la revendication 6, **caractérisée en ce que** le copolymère est obtenu par la réaction d'un copolymère de formule II 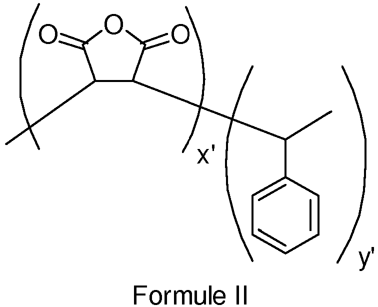 dans laquelle :
- X', Y' représentent la fraction molaire de chacune des unités monomériques, X' est compris entre 0,3 et 0,9 et Y' est compris entre 0,1 et 0,7, la somme X' + Y' étant égale à 1 ;
et d'une amine primaire de formule III 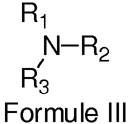
dans laquelle :
- R₁ est un radical hydrocarboné monovalent linéaire ou ramifié, saturé ou insaturé, aliphatique ou aromatique, comprenant au plus 1000 atomes de carbone, préférentiellement entre 5 et 25 atomes de carbone, pouvant comprendre un ou plusieurs hétéroatomes choisis parmi l'azote et l'oxygène, de préférence R₁ est une chaine alkyle contenant au moins une fonction amine, primaire, secondaire, tertiaire ou quaternaire ;
- R₂ et R₃, identiques ou différents sont choisis parmi un atome d'hydrogène, un radical hydrocarboné monovalent linéaire ou ramifié, saturé ou insaturé, aliphatique ou aromatique, comprenant au plus 1000 atomes de carbone, préférentiellement entre 5 et 25 atomes de carbone, pouvant comprendre un ou plusieurs hétéroatomes choisi parmi l'azote et l'oxygène, de préférence R₂ et/ou R₃ est une chaine alkyle contenant au moins une fonction amine, primaire, secondaire, tertiaire ou quaternaire.

8. Procédé de préparation d'une émulsion bitumineuse selon l'une quelconque des revendications 4 et 5, comprenant une étape de mélange d'un liant bitumineux et d'une composition émulsifiante selon l'une quelconque des revendications 1 à 5.

## Patentansprüche

1. Emulgatorzusammensetzung, umfassend:
- ein Copolymer der Formel I, in Salzform oder nicht: 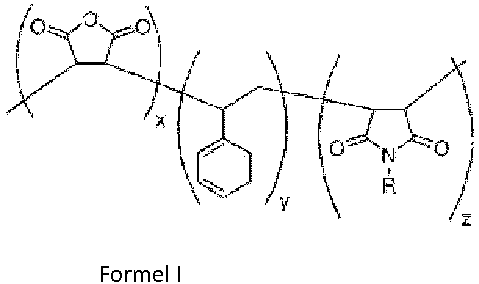 Wobei:
- R ein einwertiger, linearer oder verzweigter, gesättigter oder ungesättigter, aliphatischer oder aromatischer Kohlenwasserstoffrest mit höchstens 1000 Kohlenstoffatomen, bevorzugt zwischen 5 und 25 Kohlenstoffatomen, ist, der ein oder mehrere Heteroatome, gewählt aus Stickstoff und Sauerstoff, enthalten kann, wobei bevorzugt R eine Alkylkette ist, die wenigstens eine primäre, sekundäre, tertiäre oder quaternäre Aminfunktion umfasst;
- X, Y und Z den Molanteil jeder der Monomereinheiten darstellen, wobei X kleiner als 0,1 ist, Y zwischen 0,1 und 0,7 liegt und Z zwischen 0,3 und 0,9 liegt, wobei die Summe X + Y + Z gleich 1 ist,
- und wenigstens einen Emulgator, gewählt aus der Gruppe, umfassend kationische Emulgatoren, nichtionische Emulgatoren und amphotere Emulgatoren und deren Mischungen.

2. Emulgatorzusammensetzung nach Anspruch 1, **dadurch gekennzeichnet, dass** R gewählt ist aus der Gruppe, umfassend, bevorzugt bestehend aus, 2-Ethylhexylamin, N-Octylamin, Decylamin, Octadecylamin, Stearylamin, Laurylamin, N-Methylstearinamin, N-Ethyloctadecylamin, N-Butyllaurylamin und deren Mischungen.

3. Emulgatorzusammensetzung nach einem der vorhergehenden Ansprüche, **dadurch gekennzeichnet, dass** der Emulgator gewählt ist aus Fettalkylimidazopolyaminen, Fettalkylamidopolyaminen, Fettpolyaminen, alkoxylierten Fettpolyaminen, alkylierten Fettpolyaminen und deren Mischungen, wobei vorteilhafterweise der Emulgator gewählt ist aus Mischungen von C16-C18-Fettalkylimidazopolyaminen, die durch Umsetzung von Fettsäuren oder Pflanzenöl mit Polyethylenpolyaminen wie Triethylentetramin (TETA), Tetraethylenpentamin (TEPA) und Pentaethylenhexamin (PEHA) erhalten werden, und ethoxylierten Talgfettpolyaminen gewählt ist.

4. Bitumenemulsion, umfassend ein bituminöses Bindemittel, die Emulgatorzusammensetzung nach einem der Ansprüche 1 bis 3 und Wasser, **dadurch gekennzeichnet, dass** der Massenanteil des Copolymers der Emulgatorzusammensetzung, bezogen auf das Gesamtgewicht der Emulsion, zwischen 0,75 % und 3 % liegt, stärker bevorzugt zwischen 0,9 % und 2 % und noch stärker bevorzugt zwischen 1 % und 1,4 %.

5. Bitumenemulsion nach Anspruch 4, **dadurch gekennzeichnet, dass** der Massenanteil des bituminösen Bindemittels, bezogen auf das Gesamtgewicht der Emulsion, zwischen 50 % und 80 % liegt.

6. Verwendung eines Copolymers der Formel I, in Salzform oder nicht: 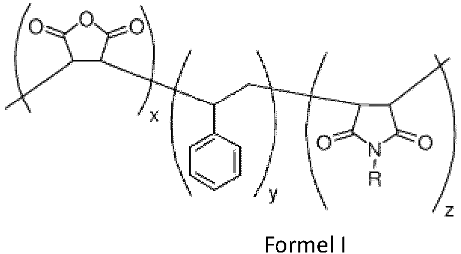 wobei:
- R ein einwertiger, linearer oder verzweigter, gesättigter oder ungesättigter, aliphatischer oder aromatischer Kohlenwasserstoffrest mit höchstens 1000 Kohlenstoffatomen, bevorzugt zwischen 5 und 25 Kohlenstoffatomen, ist, der ein oder mehrere Heteroatome, gewählt aus Stickstoff und Sauerstoff, enthalten kann, wobei bevorzugt R eine Alkylkette ist, die wenigstens eine primäre, sekundäre, tertiäre oder quaternäre Aminfunktion umfasst;
- X, Y und Z den Molanteil jeder der Monomereinheiten darstellen, X kleiner als 0,1 ist, Y zwischen 0,1 und 0,7 liegt und Z zwischen 0,3 und 0,9 liegt, wobei die Summe X + Y + Z gleich 1 ist;
zur Herstellung einer bituminösen Emulsion vom kationischen oder nichtionischen Typ.

7. Verwendung nach Anspruch 6, **dadurch gekennzeichnet, dass** das Copolymer durch die Reaktion eines Copolymers der Formel II erhalten wird, 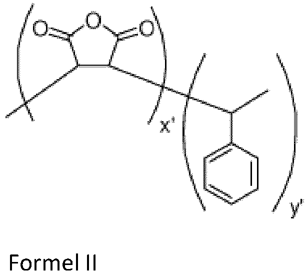 wobei:
- X', Y' den Molanteil jeder der Monomereinheiten darstellen, X' zwischen 0,3 und 0,9 liegt und Y' zwischen 0,1 und 0,7 liegt, wobei die Summe X' + Y' gleich 1 ist; und eines primären Amins der Formel III 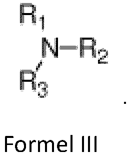 wobei:
- R₁ ein einwertiger, linearer oder verzweigter, gesättigter oder ungesättigter, aliphatischer oder aromatischer Kohlenwasserstoffrest mit höchstens 1000 Kohlenstoffatomen, bevorzugt zwischen 5 und 25 Kohlenstoffatomen, ist, der ein oder mehrere Heteroatome, gewählt aus Stickstoff und Sauerstoff, enthalten kann, wobei bevorzugt R₁ eine Alkylkette ist, die wenigstens eine primäre, sekundäre, tertiäre oder quaternäre Aminfunktion umfasst;
- R₂ und R₃, die gleich oder verschieden sind, gewählt sind aus einem Wasserstoffatom, einem linearen oder verzweigten, gesättigten oder ungesättigten, aliphatischen oder aromatischen einwertigen Kohlenwasserstoffrest mit höchstens 1000 Kohlenstoffatomen, bevorzugt zwischen 5 und 25 Kohlenstoffatomen, die ein oder mehrere Heteroatome, gewählt aus Stickstoff und Sauerstoff, enthalten können, wobei bevorzugt R₂ und/oder R₃ eine Alkylkette ist, die wenigstens eine primäre, sekundäre, tertiäre oder quaternäre Aminfunktion umfasst.

8. Verfahren zur Herstellung einer bituminösen Emulsion nach einem der Ansprüche 4 und 5, umfassend einen Schritt des Mischens eines bituminösen Bindemittels und einer Emulgatorzusammensetzung nach einem der Ansprüche 1 bis 5.

## Claims

1. Emulsifier composition comprising:
- a copolymer of formula I, in salified form or not: 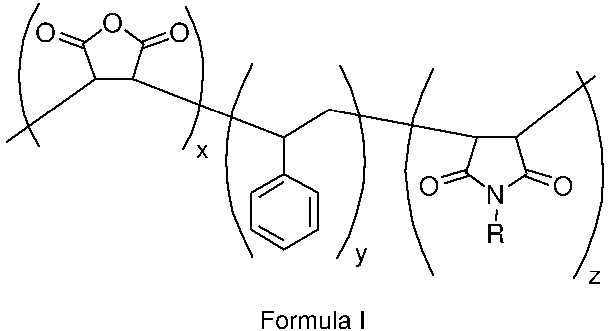 in which :
- R is a linear or branched, saturated or unsaturated, aliphatic or aromatic monovalent hydrocarbon radical comprising at most 1000 carbon atoms, preferably between 5 and 25 carbon atoms, which may comprise one or more heteroatoms chosen from nitrogen and oxygen, preferably R is an alkyl chain containing at least one primary, secondary, tertiary or quaternary amine function;
- X, Y and Z represent the molar fraction of each of the monomer units, X is less than 0.1, Y is comprised between 0.1 and 0.7 and Z is comprised between 0.3 and 0.9, the sum X + Y + Z being equal to 1,
- and at least one emulsifier chosen from the group comprising cationic emulsifiers, non-ionic emulsifiers and amphoteric emulsifiers and mixtures thereof.

2. Emulsifying composition according to claim 1, **characterized in that** R is chosen from the group comprising, preferably consisting of, 2-ethylhexylamine, N-octylamine, decylamine, octadecylamine, stearylamine, laurylamine, N-methylstearin amine, N-ethyloctadecylamine, N-butyllaurylamine and mixtures thereof.

3. Emulsifier composition according to any one of the preceding claims, **characterized in that** the emulsifier is chosen from fatty alkylimidazopolyamines, fatty alkylamidopolyamines, fatty polyamines, alkoxylated fatty polyamines, alkylated fatty polyamines and mixtures thereof, more advantageously, said emulsifier is chosen from mixtures of C16-C18 fatty alkylimidazopolyamines obtained by reacting fatty acids or vegetable oil with polyethylenepolyamines such as triethylenetetramine (TETA), tetraethylenepentamine (TEPA) and pentaethylenehexamine (PEHA) and ethoxylated tallow fatty polyamines.

4. Bituminous emulsion comprising a bituminous binder, the emulsifying composition according to any one of claims 1 to 3 and water, **characterized in that** the percentage by weight of the copolymer of said emulsifying composition, relative to the total weight of the emulsion, is comprised between 0.75% and 3%, more advantageously between 0.9% and 2% and even more advantageously between 1% and 1.4%.

5. Bituminous emulsion according to claim 4, **characterized in that** the percentage by weight of bituminous binder, relative to the total weight of the emulsion, is comprised between 50% and 80%.

6. Use of a copolymer of formula I, in salified form or not : 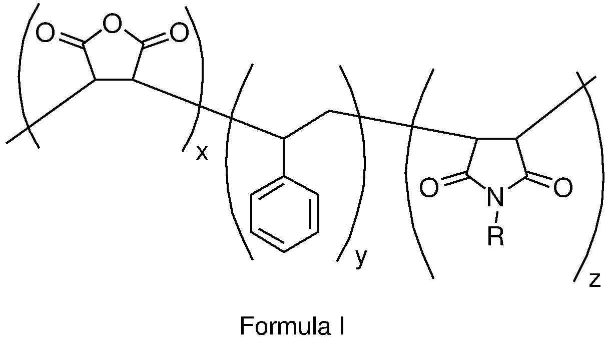 in which :
- R is a linear or branched, saturated or unsaturated, aliphatic or aromatic monovalent hydrocarbon radical comprising at most 1000 carbon atoms, preferably between 5 and 25 carbon atoms, which may comprise one or more heteroatoms chosen from nitrogen and oxygen, preferably R is an alkyl chain containing at least one primary, secondary, tertiary or quaternary amine function;
- X, Y and Z represent the molar fraction of each of the monomer units, X is less than 0.1, Y is comprised between 0.1 and 0.7 and Z is comprised between 0.3 and 0.9, the sum X + Y + Z being equal to 1;
for the preparation of a cationic or non-ionic bituminous emulsion.

7. Use according to claim 6, **characterized in that** the copolymer is obtained by reacting a copolymer of formula II 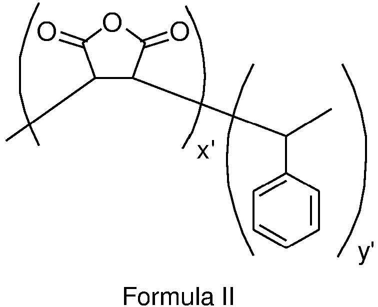 in which:
- X' and Y' represent the molar fraction of each of the monomer units, X' is comprised between 0.3 and 0.9 and Y' is comprised between 0.1 and 0.7, the sum X' + Y' being equal to 1;
and a primary amine of formula III
in which : 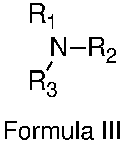
- R₁ is a linear or branched, saturated or unsaturated, aliphatic or aromatic monovalent hydrocarbon radical comprising at most 1000 carbon atoms, preferably between 5 and 25 carbon atoms, which may comprise one or more heteroatoms chosen from nitrogen and oxygen, preferably R₁ is an alkyl chain containing at least one primary, secondary, tertiary or quaternary amine function;
- R₂ and R₃, which may be identical or different, are chosen from a hydrogen atom, a linear or branched, saturated or unsaturated, aliphatic or aromatic monovalent hydrocarbon radical comprising at most 1000 carbon atoms, preferably between 5 and 25 carbon atoms, which may comprise one or more heteroatoms chosen from nitrogen and oxygen, preferably R₂ and/or R₃ is an alkyl chain containing at least one primary, secondary, tertiary or quaternary amine function.

8. Process for preparing a bituminous emulsion according to any one of claims 4 and 5, comprising a step of mixing a bituminous binder and an emulsifying composition according to any one of claims 1 to 5.
